# EUROPÄISCHE PATENTANMELDUNG

(11) **EP 2 518 644 A1**
(43) Veröffentlichungstag der Anmeldung: **31.10.2012**
(21) Anmeldenummer: 11164257.5
(22) Anmeldetag: 29.04.2011
(51) Int. Cl.: G06F 17/30

(54) **Verfahren zur Steuerung der Übersetzung von vorgegebenen Regeln und/oder eingehenden Daten eines Datenstroms**

(71) Anmelder: SIEMENS AKTIENGESELLSCHAFT, 80333 München (DE)
(72) Erfinder: Bäse, Gero, 81739, München (DE); Oertel, Norbert, 84032, Landshut (DE)

(57) **Zusammenfassung**

Die Erfindung beschreibt ein Verfahren zur Steuerung der Übersetzung von vorgegebenen Regeln (R) und/oder eingehenden Daten (D) eines Datenstroms, dessen Daten (D) in einem XML-Schema beschrieben sind, bei dem eine Konvertierung von hierarchisch angeordneten Elementen (W, K1, EL1, K2, EL2) des XML-Schemas in eine Liste (L) mit Listeneinträgen durchgeführt wird. Dies erfolgt, indem für ein Element (W, K1, K2), das in dem XML-Schema ein Elternteil repräsentiert, eine Faktenklasse (FK) erzeugt wird, welche für jede mögliche von dem Elternteil ausgehende Verwandtschaftsbeziehung ein sämtliche Elemente (W, K1, EL1, K2, EL2) des Pfads der betreffenden Verwandtschaftsbeziehung des XML-Schemas umfassendes Faktenelement (FE) umfasst, wobei die Faktenelemente (FE) die Listeneinträge der Faktenklassen (FK) darstellen. Zumindest einem der Faktenelemente (FE) wird eine Eigenschaftsinformation (EI) zugeordnet, die eine Verarbeitungsanweisung für das zugeordnete Faktenelement (FE) für die Übersetzung der Regeln (R) und/oder der Daten (D) darstellt. Eine Übersetzung der Regeln (R) erfolgt, indem aus den Faktenelementen (FE) die in einem Pfad der Verwandtschaftsbeziehung enthaltenen Elemente (W, K1, EL1, K2, EL2) des XML-Schemas ermittelt und entsprechend den jeweils zugeordneten Eigenschaftsinformationen (EI) in eine, für eine Regelmaschine (RM) verarbeitbare, Verarbeitungsvorschrift überführt werden. Ferner erfolgt eine Übersetzung der Daten (D) des Datenstroms in eine durch die Regelmaschine (RM) verarbeitbare Faktenklasseninstanz (FKI), indem gemäß der, einem Faktenelement (FE) zugeordneten Eigenschaftsinformation (EI) eine vorgegebene Behandlung von optionalen Elemente (W, K1, EL1, K2, EL2) des XML-Schemas erfolgt.

## Beschreibung

Die Erfindung betrifft ein Verfahren und ein System zur Steuerung der Übersetzung von vorgegebenen Regeln und/oder eingehenden Daten eines Datenstroms, dessen Daten in einem XML-Schema vorliegen.

Bei den Daten des Datenstroms kann es sich beispielsweise um Analyseergebnisse eines Audio- und/oder Videometadatenstroms handeln. Um die Verarbeitung automatisiert vornehmen zu können, werden diese Daten in einem XML-Dokument bereitgestellt. In der vorliegenden Beschreibung ist unter einem XML-Dokument ein Datenstrom zu verstehen, dessen Daten in einem XML-Schema vorliegen. XML ist die Abkürzung für Extensible Markup Language und stellt eine Sprache zur Darstellung hierarchisch strukturierter Daten in Form von Textdaten dar. XML wird unter anderem für einen plattform- und implementationsunabhängigen Austausch von Daten zwischen Computersystemen eingesetzt.

In einem XML-Dokument enthaltene Elemente können verpflichtender oder optionaler Art sein. Bei der Auswertung des Datenstroms unter Verwendung von Regeln in einer Regelmaschine müssen dabei insbesondere für optionale Elemente Vorkehrungen getroffen werden, um eine korrekte Verarbeitung in der Regelmaschine zu ermöglichen. Die Berücksichtigung optionaler Elemente erfolgt bislang manuell durch einen Programmierer. Werden optionale Elemente in den Regeln nicht korrekt abgebildet, so kann in der Regelmaschine ein unerwarteter Fehler auftreten, welcher zum Abbruch der weiteren Abarbeitung des Datenstroms durch die Regelmaschine führt.

Es ist deshalb wünschenswert, der Regelmaschine eine vollständige und aktuelle Faktenbasis zur Verfügung zu stellen, wobei die in einem Datenstrom enthaltenen optionalen Elemente in automatisierter Weise berücksichtigt werden können. Es ist daher Aufgabe der vorliegenden Erfindung, ein Verfahren und ein System anzugeben, welche eine automatisierte Verarbeitung von optionalen Elementen eines Metadatenstroms, dessen Daten in einem XML-Schema vorliegen, ermöglichen.

Diese Aufgaben werden gelöst durch ein Verfahren gemäß den Merkmalen des Patentanspruchs 1 und ein System gemäß den Merkmalen des Patentanspruchs 10. Vorteilhafte Ausgestaltungen ergeben sich aus den abhängigen Patentansprüchen.

Die Erfindung schlägt ein Verfahren zur Steuerung der Übersetzung von vorgegebenen Regeln oder eingehenden Daten eines Datenstroms vor, dessen Daten in einem XML-Schema beschrieben sind. Bei dem Verfahren wird erfindungsgemäß eine Konvertierung von hierarchisch angeordneten Elementen des XML-Schemas in eine Liste mit Listeneinträgen durchgeführt. Hierbei wird für ein Element, das in dem XML-Schema ein Elternteil repräsentiert, eine Faktenklasse erzeugt, welche für jede mögliche von dem Elternteil ausgehende Verwandtschaftsbeziehung ein sämtliche Elemente des Pfads der betreffenden Verwandtschaftsbeziehung des XML-Schemas umfassendes Faktenelement umfasst, wobei die Faktenelemente die Listeneinträge der Faktenklasse darstellen. Bei der Konvertierung wird weiter zumindest einem der Faktenelemente eine Eigenschaftsinformation zugeordnet, die eine Verarbeitungsanweisung für das zugeordnete Faktenelement für die Übersetzung der Regeln und/oder der Daten darstellen. Insbesondere kann jedem der Faktenelemente eine Eigenschaftsinformation zugeordnet werden.

Es erfolgt eine Übersetzung der Regeln, indem aus den Faktenelementen die in einem Pfad der Verwandtschaftsbeziehung enthalten Elemente des XML-Schemas ermittelt und entsprechend den jeweils zugeordneten Eigenschaftsinformationen in eine, für eine Regelmaschine verarbeitbare, Verarbeitungsvorschrift überführt werden. Alternativ oder zusätzlich erfolgt eine Übersetzung der Daten des Datenstroms in eine durch die Regelmaschine verarbeitbare Faktenklasseninstanz, indem gemäß der, einem Faktenelement zugeordneten Eigenschaftsinformation eine vorgegebene Behandlung optionaler Elemente des XML-Schemas erfolgt.

Weiter wird ein System zur Steuerung der Übersetzung von vorgegebenen Regeln und/oder eingehenden Daten eines Datenstroms vorgeschlagen, dessen Daten in einem XML-Schema beschrieben sind. Das System ist dazu ausgebildet, eine Konvertierung von hierarchisch angeordneten Elementen des XML-Schemas in eine Liste mit Listeneinträgen durchzuführen. Hierbei wird für ein Element, das in dem XML-Schema ein Elternteil repräsentiert, eine Faktenklasse erzeugt, welche für jede mögliche von dem Elternteil ausgehende Verwandtschaftsbeziehung ein sämtliche Elemente des Pfads der betreffenden Verwandtschaftsbeziehung des XML-Schemas umfassendes Faktenelement umfasst, wobei die Faktenelemente die Listeneinträge der Faktenklasse darstellen. Im Rahmen der Konvertierung wird zumindest einem der Faktenelemente eine Eigenschaftsinformation zugeordnet, die eine Verarbeitungsanweisung für das zugeordnete Faktenelement für die Übersetzung der Regeln und/oder der Daten darstellen.

Das System ist weiter dazu ausgebildet, eine Übersetzung der Regeln durchzuführen, indem aus den Faktenelementen, die für einen Pfad der Verwandtschaftsbeziehung enthaltenen Elemente des XML-Schemas ermittelt und entsprechend den jeweils zugeordneten Eigenschaftsinformationen in eine, für eine Regelmaschine verarbeitbare, Verarbeitungsschrift überführt werden. Alternativ oder zusätzlich ist das System dazu ausgebildet, eine Übersetzung der Daten des Datenstroms in eine durch die Regelmaschine verarbeitbare Faktenklasseninstanz durchzuführen, indem gemäß der, eine Faktenelement zugeordneten Eigenschaftsinformation eine vorgegebene Behandlung optionaler Elemente des XML-Schemas erfolgt.

Die Konvertierung der hierarchisch angeordneten Elemente des XML-Schemas in eine, Faktenelemente genannte, Listeneinträge umfassende Liste einer Faktenklasse ermöglicht es, Verarbeitungsanweisungen, insbesondere für optionale Elemente des XML-Schemas vorzusehen. Dabei werden bei der Konvertierung des XML-Schemas, in dem die Elemente in hierarchischer Form vorliegen, in eine flache Struktur überführt. Hierbei werden die optionalen Elemente und deren Position innerhalb der hierarchischen Struktur berücksichtigt. Da die optionalen Elemente nunmehr in der Liste einer Faktenklasse enthalten sind, können anhand den einem Faktenelement zugeordneten Eigenschaftsinformationen, den darin enthaltenen optionalen Elementen die Verarbeitungsanweisungen zugeordnet werden. Diese können dann in automatisierter Weise bei der Übersetzung der Regeln und/oder der Daten des Datenstroms berücksichtigt werden.

Die Konvertierung der hierarchisch strukturierten Elemente in eine Liste mit flacher Struktur schafft damit die Möglichkeit, optionale Elemente eines XML-Schemas für die nachfolgende Verarbeitung, beispielsweise mittels einer Regelmaschine, vorzubereiten und zur Verfügung zu stellen.

Die Zuordnung der Elemente aus dem empfangenen XML-Dokument in wenigstens eine Faktenklasse kann beispielsweise mittels XSLT-Stylesheets erfolgen.

Um die Anzahl der Listeneinträgen in einer Faktenklasse so gering wie möglich zu halten, ist es bevorzugt, wenn für ein Element, das das Wurzelelement des XML-Schemas repräsentiert, die Faktenklasse erzeugt wird. In dieser Ausgestaltung wird lediglich eine einzige Faktenklasse für das XML-Dokument erzeugt. Da die Pfade hier eine Vielzahl von Elementen aufweisen können, macht sich dies in einer entsprechenden Anzahl an Elementen in einem Faktenelement bemerkbar.

Alternativ kann eine jeweilige Faktenklasse für Geschwisterelemente des XML-Schemas, welche ein gemeinsames Elternteil aufweisen, erzeugt werden. Bei einer derartigen Konvertierung existieren mehrere Faktenklassen nebeneinander, welche für die Übersetzung der Regeln und/oder der Übersetzung der eingehenden Daten des Datenstroms verwendet werden. Zwar ist bei dieser Ausgestaltung insgesamt über alle Faktenklassen eine größere Anzahl an Listeneinträgen vorhanden. Die einzelnen Regeln können, da die Faktenelemente dann jeweils eine geringere Anzahl an Elementen aufweisen (können), jedoch einfacher aufgebaut werden.

In einer weiteren zweckmäßigen Ausgestaltung wird bei der Übersetzung von Regeln mittels der Faktenklasse eine Vorschrift für die Verarbeitung von optionalen Elementen des XML-Schemas erzeugt. Diese Vorschrift enthält Informationen, in welcher Weise die Regelmaschine optionale Elemente behandeln soll. Insbesondere kann hierdurch Vorkehrung dafür getroffen werden, dass ein optionales Element keine Inhaltsinformation umfasst. Eine derartige, durch die Regel in behandelte Fehlerabfrage vermeidet unerwartete Fehler, welche zum Abbruch der Regelmaschine führen können.

In einer weiteren zweckmäßigen Ausgestaltung wird bei der Übersetzung von Daten des Datenstroms optionalen Elementen, für die in den Daten des Datenstroms kein Datenwert enthalten ist, ein Vorgabewert zugewiesen. Dieser Vorgabewert wird durch die Regelmaschine wie ein tatsächlicher Mess- oder Analysewert des Datenstroms behandelt. Auch hierdurch können unerwartete Fehler der Regelmaschine während ihres Betriebs vermieden werden.

Es ist weiterhin zweckmäßig, wenn optionalen Elementen des XML-Schemas nach einer Initialisierung der Regelmaschine aufgrund einer Änderung einer der Regeln und/oder einem Hinzufügen einer neuen Regel, der entsprechende Vorgabewert erneut zugewiesen wird. Auch hierdurch kann sichergestellt werden, dass optionale Elemente immer einen Inhaltswert - den Vorgabewert oder einen tatsächlichen Mess- oder Analysewert des Datenstroms - enthalten, so dass ein unerwarteter Fehler der Regelmaschine nicht auftreten kann.

Gemäß einer weiteren zweckmäßigen Ausgestaltung wird eine Anzahl an Faktenklassen einer Faktenkategorie zugeordnet, wobei eine Faktenkategorie Informationen über vorgegebene Verarbeitungsmodi für zumindest manche der in einer Faktenklasse enthaltenen Faktenelemente oder die in den Faktenelementen enthaltene Elemente des XML-Schemas umfasst. Hiermit können definierte Behandlungsweisen für die in einer Faktenklasse enthaltenen Elemente festgelegt werden. Hierdurch wird eine strukturierte Möglichkeit zur effizienten Behandlung von eingehenden XML-Dokumenten bereitgestellt.

Gemäß einer weiteren zweckmäßigen Ausgestaltung erfolgt das Auslesen und Verarbeiten der in der Faktenklasse enthaltenen Eigenschaftsinformationen zur Übersetzung der Regeln und/oder Daten des Datenstroms automatisiert. Insbesondere hat dies zur Folge, dass während der Laufzeit der Regelmaschine geänderte oder ergänzte Regeln keinen manuellen Eingriff eines Administrators erfordern, da in den Eigenschaftsinformationen, welche jeweiligen Faktenelementen einer Faktenklasse zugeordnet sind, bereits Vorgaben bezüglich der Verarbeitung bei der Übersetzung enthalten sind.

In einer weiteren zweckmäßigen Ausgestaltung umfasst die Faktenklasseninstanz eine der Faktenklasse entsprechende Struktur mit Listeneinträgen, welche die aus den Daten des Datenstroms entnommenen Werte und optional entsprechend der Eigenschaftsinformationen erzeugte Werte für die optionalen Elemente des XML-Dokuments umfassen.

Die Erfindung wird nachfolgend näher anhand eines Ausführungsbeispiels in der Zeichnung erläutert. Es zeigen:
- Fig. 1: eine schematische Darstellung der Konvertierung eines in hierarchischer Form vorliegenden XML-Dokuments in eine flache Struktur, und
- Fig. 2: eine schematische Darstellung des erfindungsgemäßen Systems zur Steuerung der Übersetzung von vorgegebenen Regeln und/oder eingehenden Daten eines Datenstroms.

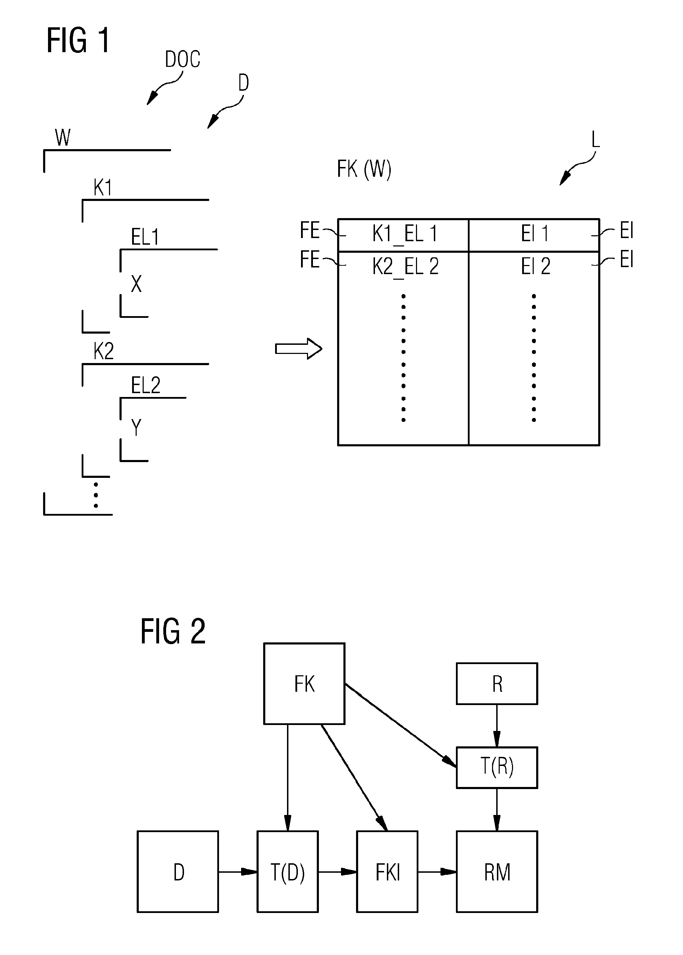

Die Fig. 1 zeigt in einer schematischen Darstellung die Konvertierung von hierarchisch angeordneten Elementen eines XML-Dokuments DOC in eine Liste L mit einer Mehrzahl an Listeneinträgen, welche zur Übersetzung von Regeln und/oder eingehenden Daten eines Datenstroms, dessen Daten in einem XML-Dokument vorliegen, verwendet wird. Bevor eine Übersetzung der Regeln und/oder der Daten des Datenstroms erfolgen kann, ist die in Fig. 1 dargestellte Konvertierung der hierarchisch angeordneten Elemente des XML-Schemas erforderlich. Das in Fig. 1 links dargestellte XML-Dokument umfasst drei Hierarchieebenen. Die oberste Hierarchieebene umfasst beispielhaft ein Wurzelelement W. Das Wurzelelement W repräsentiert ein Elternteil für die Kinder K1, K2. Die Kinder K1, K2 stellen Geschwisterelemente dar. Das Element K1 ist wiederum Elternteil des Elements EL1 mit dem Datenwert X. In entsprechender Weise repräsentiert das Element K2 das Elternteil des Elements EL2, dessen Datenwert Y beträgt. In der Praxis kann ein XML-Dokument DOC eine sehr viel größere Anzahl an Hierarchien aufweisen. Ebenso kann eine beliebige Anzahl an Geschwisterelementen einer Hierarchieebene vorgesehen sein.

Die Schwierigkeit bei der Auswertung des XML-Dokumentes DOC mit hierarchisch angeordneten Elementen besteht darin, dass manche Elemente unterhalb der obersten Hierarchieebene optionaler Natur sein können. Um eine definierte Verarbeitung auch optionaler Elemente des XML-Dokumentes DOC sicherstellen zu können, werden die in diesem enthaltenen Elemente W, K1, K2, EL1, EL2 in eine Liste L mit Listeneinträgen überführt. Dabei wird für jede mögliche von einem Elternteil ausgehende Verwandtschaftsbeziehung ein sämtliche Elemente des Pfads der betreffenden Verwandtschaftsbeziehung des XML-Dokumentes umfassendes Faktenelement FK erzeugt.

Im vorliegenden Ausführungsbeispiel wird von dem Wurzelelement W ausgegangen. Die Faktenklasse wird daher als FK(W) bezeichnet. Das in Fig. 1 gezeigte XML-Dokument DOC weist zwei Pfade auf. Der erste Pfad geht aus von dem Wurzelelement W und führt über K1 zum Element EL1. Der zweite Pfad geht ebenfalls vom Wurzelelement aus und führt über das Element K2 zum Element EL 2. Für jeden der Pfade wird ein Faktenelement FE als Listeneintrag erzeugt. Dem ersten Listeneintrag K1_EL1 wird eine Eigenschaftsinformation EI zugeordnet. Ebenso wird dem zweiten Listeneintrag K2_EL2 eine Eigenschaftsinformation EI2 zugeordnet. Je nach Komplexität des XML-Dokuments DOC kann eine Faktenklasse FK eine große Anzahl an Listeneinträgen in Form von Faktenelementen FE umfassen.

In den Eigenschaftsinformationen EI sind für jeden "Pfad", d.h. jedes Faktenelement FE, Verarbeitungsanweisungen enthalten, welche für die Übersetzung der Regeln und/oder Daten des Datenstroms einzuhalten sind. Handelt es sich bei dem Element EL1 beispielsweise um ein optionales Element, so ist in der Eigenschaftsinformation EI eine Information darüber enthalten, in welcher Weise das Element EL1 verarbeitet werden soll. Beispielsweise kann die Eigenschaftsinformation EI1 für die Übersetzung einer Regel die Information enthalten, dass eine Überprüfung auf das Vorhandensein des Elements EL1 erfolgen soll. Nur in dem Fall, dass das Element EL1 enthalten ist, wird eine "dann"-Vorschrift ausgeführt. Im anderen Fall wird das Element EL1 z.B. übergangen. Bezüglich der Übersetzung der Daten des Datenstroms kann die Eigenschaftsinformation EL1 beispielsweise die Zuweisung eines Vorgabewerts für das Element EL1 enthalten, sofern das Element EL1 aus dem Datenstrom heraus nicht mit einem Wert belegt ist.

Im vorliegenden Ausführungsbeispiel wurde für das XML-Dokument DOC lediglich eine Faktenklasse FK(W) erzeugt, die von dem Wurzelelement ausgeht. In einem stärker komplexen XML-Dokument mit einer größeren Anzahl an Hierarchien könnte eine größere Anzahl an Faktenklassen vorgesehen sein, wobei eine jeweilige Faktenklasse beispielsweise für Geschwisterelemente des XML-Dokuments, welche ein gemeinsames Elternteil aufweisen, erzeugt wird.

Fig. 2 zeigt eine schematische Darstellung des erfindungsgemäßen Systems zur Steuerung der Übersetzung von vorgegebenen Regeln R und/oder eingehenden Daten D eines Datenstroms. Die Daten D liegen in Gestalt des in Fig. 1 dargestellten XML-Dokuments DOC vor. Mit T(R) und T(D) sind jeweils Übersetzer für die Regeln R und die Daten D dargestellt. Die übersetzten Regeln werden einer Regelmaschine RM zur Verarbeitung zur Verfügung gestellt. Die Übersetzung der Daten D mittels des Übersetzers T(D) mündet in eine Faktenklasseninstanz FKI. Eine Faktenklasseninstanz FKI umfasst eine der Faktenklasse FK(W) entsprechende Struktur mit Listeneinträgen, welche aus den Daten D des Datenstroms entnommene Werte und entsprechend der Eigenschaftsinformationen EI erzeugte Werte für die optionalen Elemente des Datenstroms umfassen. Diese als Fakten bezeichneten Informationen werden der Regelmaschine RM zur weiteren Verarbeitung anhand der übersetzen Regeln zugeführt. Ergebnis der Regelmaschine ist eine Faktenbasis.

Die oben beschriebenen erzeugten Faktenklassen FK werden einerseits den Übersetzern T(R) und T(D) zur Verfügung gestellt. Andererseits wird anhand der Faktenklasse die Faktenklasseninstanz in der oben beschriebenen Art erzeugt.

Eine Übersetzung der Regeln R erfolgt, indem aus den Faktenelementen der Faktenklasse oder -klassen die darin enthaltenen Elemente K1, EL1 bzw. K2, EL2 des XML-Dokumentes ermittelt und entsprechend den jeweils zugeordneten Eigenschaftsinformationen in eine für die Regelmaschine RM verarbeitbare, Verarbeitungsvorschrift überführt werden. Während die Erstellung der Faktenklassen und der darin enthaltenen Eigenschaftsinformationen EI manuell durch einen Administrator bzw. Programmierer erfolgt, kann die Übersetzung der Regeln anhand der zur Verfügung gestellten Informationen automatisiert erfolgen. Dies ist auch dann möglich, wenn sich zur Laufzeit der Regelmaschine eine Regel ändert oder eine Regel hinzugefügt wird.

Eine Übersetzung der Daten D des Datenstroms in eine durch die Regelmaschine RM verarbeitbare Faktenklasseninstanz FKI erfolgt, indem gemäß der, einem Faktenelement zugeordneten Eigenschaftsinformation EI eine vorgegebene Behandlung optionaler Elemente K1, EL1, K2, EL2 der Faktenklasse FK(W) des XML-Dokuments erfolgt. Dabei kann insbesondere bei der Übersetzung der Daten D des Datenstroms optionalen Elementen, für die in den Daten D des Datenstroms kein Datenwert enthalten ist, ein Vorgabewert zugewiesen werden.

Ebenso kann die erneute Zuweisung eines Vorgabewerts des optionalen Elements vorgesehen sein, wenn die Regelmaschine aufgrund einer Änderung einer der Regeln oder einem Hinzufügen einer neuen Regel initialisiert wurde.

Um die Vollständigkeit und Aktualität der Fakten für die Regelmaschine RM sicherstellen zu können, werden somit die in dem XML-Dokument DOC enthaltenen Daten vorbehandelt. Hierzu kann ein Parser verwendet werden, der unter Bezugnahme auf das vorhandene XML-Schema feststellen kann, welche Elemente tatsächlich in den Daten D vorhanden sind. Da auch bekannt ist, welche Elemente von der Regelmaschine RM benötigt werden, können optionalen Elementen Folgewerte (Vorgabewerte) zugewiesen werden. Optional kann ein Zeitparameter vorgesehen werden, bevor die Daten als Fakten in den Faktenspeicher der Regelmaschine überführt werden. Die Zeitparameter sind insbesondere für solche optionalen Elemente sinnvoll, die ihren aktuellen Wert behalten, bis eine Änderung stattfindet. Da Faktenspeicher bei Regelmaschinen gewöhnlich vollständig gelöscht werden, bevor sie neu initialisiert werden, können die Zeitparameter dazu verwendet werden, Fakten bei der nächsten Initialisierung wieder neu einzufüllen, wenn bis dahin keine Änderung erfolgt ist.

Eine weitere, strukturierte Möglichkeit zur effizienten Behandlung eingehender XML-Dokumente besteht in der Zusammenfassung mehrerer Faktenklassen zu Faktenkategorien. Durch die Faktenklasse werden definierte Behandlungsweisen (mittels der Eigenschaftsinformationen) für die in der Faktenklasse enthaltenen Faktenelemente festgelegt. Beispielsweise können alle in einer Faktenklasse "Properties" eingeordneten Elemente sofort als Fakten zur Verfügung gestellt werden, da davon auszugehen ist, dass alle zugehörigen, in den Regeln verwendeten Elemente bereits vorliegen. Properties werden meist verwendet, um dynamisches Verhalten von Objekten in einer Szene eines Videos darzustellen. Eine Eigenschaft ist beispielsweise "XY hat einen bestimmten Bereich betreten/verlassen", "XY bewegt sich nicht mehr", u.ä..

Als Beispiel für eine Faktenkategorie können sog. "Notification Messages" gesehen werden. Diese gliedern sich z.B. in Faktenklassen, wie Alarme von Geräten (Beispiel Fluktuationen in einer Stromversorgung), Alarme von Algorithmen (ein Objekt hat einen verbotenen Bereich betreten), usw. bis hin zu Nachrichten über mangelnde Beleuchtung in einem zu überwachenden Bereich oder der Notwendigkeit eines Backups für ein kritisches Speichermedium. Für eine Faktenkategorie kann eine bestimmte Art der Behandlung festgelegt werden, wie z.B. "die darin enthaltenen Faktenklassen müssen immer archiviert werden", während für die Faktenklassen jeweils spezielle Vorgaben gelten, wie diese in die Faktenbasis überführt werden.

Die Zuordnung der Elemente aus dem empfangenen XML-Dokument in die Faktenklassen kann beispielsweise mittels eines XSLT-Stylesheets erfolgen.

Die Filterung von Elementen vor dem Weiterreichen an die Faktenbasis kann beispielsweise mit einer CEP (Complex Event Processing) Engine bzw. einer sog. Streamprocessing Engine erfolgen.

Eine besondere Schwierigkeit entsteht beim Aufsetzen einer Verbindung. Da nicht sofort alle optionalen Elemente vorliegen, beispielsweise abhängig von einem vorgegebenen Sendeintervall, können Daten zwischengespeichert und aufkumuliert werden, bis eine vorgegebene Struktur vervollständigt ist. Dieser Ansatz beinhaltet eine Verzögerung unbekannter Dauer und kann nicht für Ereignisse (Events) angewandt werden. Alternativ wird für noch nicht vorhandene Elemente ein vordefinierter Wert an die Regelmaschine geliefert, um Teilauswertungen der Regeln zu ermöglichen.

## Patentansprüche

1. Verfahren zur Steuerung der Übersetzung von vorgegebenen Regeln (R) und/oder eingehenden Daten (D) eines Datenstroms, dessen Daten (D) in einem XML-Schema beschrieben sind, bei dem
- eine Konvertierung von hierarchisch angeordneten Elementen (W, K1, EL1, K2, EL2) des XML-Schemas in eine Liste (L) mit Listeneinträgen durchgeführt wird, indem
- für ein Element (W, K1, K2), das in dem XML-Schema ein Elternteil repräsentiert, eine Faktenklasse (FK) erzeugt wird, welche für jede mögliche von dem Elternteil ausgehende Verwandtschaftsbeziehung ein sämtliche Elemente (W, K1, EL1, K2, EL2) des Pfads der betreffenden Verwandtschaftsbeziehung des XML-Schemas umfassendes Faktenelement (FE) umfasst, wobei die Faktenelemente (FE) die Listeneinträge der Faktenklasse (FK) darstellen;
- zumindest einem der Faktenelemente (FE) eine Eigenschaftsinformation (EI) zugeordnet wird, die eine Verarbeitungsanweisung für das zugeordnete Faktenelement (FE) für die Übersetzung der Regeln (R) und/oder der Daten (D) darstellen;
- eine Übersetzung der Regeln (R) erfolgt, indem aus den Faktenelementen (FE) die in einem Pfad der Verwandtschaftsbeziehung enthaltenen Elemente (W, K1, EL1, K2, EL2) des XML-Schemas ermittelt und entsprechend den jeweils zugeordneten Eigenschaftsinformationen (EI) in eine, für eine Regelmaschine (RM) verarbeitbare, Verarbeitungsvorschrift überführt werden; und/oder
- eine Übersetzung der Daten (D) des Datenstroms in eine durch die Regelmaschine (RM) verarbeitbare Faktenklasseninstanz (FKI) erfolgt, indem gemäß der, einem Faktenelement (FE) zugeordneten Eigenschaftsinformation (EI) eine vorgegebene Behandlung optionaler Elemente (W, K1, EL1, K2, EL2) des XML-Schemas erfolgt.

2. Verfahren nach Anspruch 1, bei dem für ein Element (W), das das Wurzelelement des XML-Schemas repräsentiert, die Faktenklasse (FK) erzeugt wird.

3. Verfahren nach Anspruch 1 oder 2, bei dem eine jeweilige Faktenklasse (FK) für Geschwisterelemente des XML-Schemas, welche ein gemeinsames Elternteil aufweisen, erzeugt wird.

4. Verfahren nach einem der vorhergehenden Ansprüche, bei dem bei der Übersetzung von Regeln (R) mittels der Faktenklasse (FK) eine Vorschrift für die Verarbeitung von optionalen Elementen (W, K1, EL1, K2, EL2) des XML-Schemas erzeugt wird.

5. Verfahren nach einem der vorhergehenden Ansprüche, bei dem bei der Übersetzung von Daten (D) des Datenstroms optionalen Elementen (W, K1, EL1, K2, EL2), für die in den Daten (D) des Datenstroms kein Datenwert enthalten ist, ein Vorgabewert zugewiesen wird.

6. Verfahren nach einem der vorhergehenden Ansprüche, bei dem optionalen Elementen des XML-Schemas nach einer Initialisierung der Regelmaschine (RM) aufgrund einer Änderung einer der Regeln (R) und/oder einem Hinzufügen einer neuen Regel (R), der entsprechende Vorgabewert erneut zugewiesen wird.

7. Verfahren nach einem der vorhergehenden Ansprüche, bei dem eine Anzahl an Faktenklassen (FK) einer Faktenkategorie zugeordnet wird, wobei eine Faktenkategorie Informationen über vorgegebene Verarbeitungsmodi für zumindest manche der in einer der Faktenklassen (FK) enthaltenen Faktenelemente (FE) oder die in den Faktenelementen (FE) enthaltenen Elemente (W, K1, EL1, K2, EL2) des XML-Schemas umfasst.

8. Verfahren nach einem der vorhergehenden Ansprüche, bei dem das Auslesen und Verarbeiten der in der Faktenklasse (FK) enthaltenen Eigenschaftsinformationen (EI) zur Übersetzung der Regeln (R) und/oder Daten (D) des Datenstroms automatisiert erfolgt.

9. Verfahren nach einem der vorhergehenden Ansprüche, bei dem die Faktenklasseninstanz (FKI) eine der Faktenklasse (FK) entsprechende Struktur mit den Listeneinträgen umfasst, welche die aus den Daten (D) des Datenstroms entnommenen Werte und entsprechend der Eigenschaftsinformationen erzeugte Werte für die optionalen Elemente des Datenstroms umfassen.

10. System zur Steuerung der Übersetzung von vorgegebenen Regeln (R) und/oder eingehenden Daten (D) eines Datenstroms, dessen Daten (D) in einem XML-Schema beschrieben sind, welches dazu ausgebildet ist,
- eine Konvertierung von hierarchisch angeordneten Elementen (W, K1, EL1, K2, EL2) des XML-Schemas in eine Liste (L) mit Listeneinträgen durchzuführen, indem
- für ein Element (W, K1, K2), das in dem XML-Schema ein Elternteil repräsentiert, eine Faktenklasse (FK) erzeugt wird, welche für jede mögliche von dem Elternteil ausgehende Verwandtschaftsbeziehung ein sämtliche Elemente (W, K1, EL1, K2, EL2) des Pfads der betreffenden Verwandtschaftsbeziehung des XML-Schemas umfassendes Faktenelement (FE) umfasst, wobei die Faktenelemente (FE) die Listeneinträge der Faktenklasse (FK) darstellen;
- zumindest einem der Faktenelemente (FE) eine Eigenschaftsinformation (EI) zugeordnet wird, die eine Verarbeitungsanweisung für das zugeordnete Faktenelement (FE) für die Übersetzung der Regeln (R) und/oder der Daten (D) darstellen;
- eine Übersetzung der Regeln (R) durchzuführen, indem aus den Faktenelementen (FE) die für einen Pfad der Verwandtschaftsbeziehung enthaltenen Elemente (W, K1, EL1, K2, EL2) des XML-Schemas ermittelt und entsprechend den jeweils zugeordneten Eigenschaftsinformationen (EI) in eine, für eine Regelmaschine (RM) verarbeitbare, Verarbeitungsvorschrift überführt werden; und/oder
- eine Übersetzung der Daten (D) des Datenstroms in eine durch die Regelmaschine (RM) verarbeitbare Faktenklasseninstanz (FKI) durchzuführen, indem gemäß der einem Faktenelement (FE) zugeordneten Eigenschaftsinformation (EI) eine vorgegebene Behandlung optionaler Elemente (W, K1, EL1, K2, EL2) des XML-Schemas erfolgt.
